# EUROPÄISCHE PATENTSCHRIFT

(11) **EP 1 407 656 B1**
(45) Veröffentlichungstag und Bekanntmachung des Hinweises auf die Patenterteilung: **04.03.2009**
(21) Anmeldenummer: 03021342.5
(22) Anmeldetag: 20.09.2003
(51) Int. Cl.: A01F 12/44, B07B 4/08

(54) **Radialgebläse**
Radial blower
Soufflante radial

(30) Priorität: 08.10.2002 DE 10246858
(43) Veröffentlichungstag der Anmeldung: 14.04.2004
(73) Patentinhaber: CLAAS Selbstfahrende Erntemaschinen GmbH, 33428 Harsewinkel (DE)
(72) Erfinder: Claes, Ulrich, 49201 Dissen (DE)

(56) Entgegenhaltungen:
- US-A- 277 347
- US-A- 2 954 123
- US-A- 3 049 128
- US-A- 4 265 077
- US-A- 4 303 079

## Beschreibung

Die Erfindung betrifft ein weiter verbessertes Radialgebläse für die Reinigungseinrichtungen landwirtschaftlicher Maschinen zum Ernten von Körnerfrüchten.

Ein leistungsstarkes Gebläse ist neben den mechanischen Reinigungsorganen, die in der Regel aus dem Vorbereitungsboden und den nachgeordneten Sieben bestehen, ein entscheidendes Funktionselement der Reinigungseinrichtung einer Erntemaschine für Körnerfrüchte. Um eine effektive Reinigung des Erntegutes zu gewährleisten, sollte der mit dem Gebläse erzeugte Luftstrom, mit dem die Feinreinigung des Erntegutes erfolgt und die abgeschiedenen Verunreinigungen in Form von Kurzstroh und Spreu aus den Reinigungseinrichtungen ausgetragen werden, möglichst homogen sein und über die gesamte Breite der Reinigungseinrichtung gleichmäßig verteilt den mechanischen Reinigungsorganen zugeführt werden.

Radialgebläse der eingangs genannten Gattung sind beispielsweise aus DE-OS 24 23 917, DE 29 22 607 C2, DE 30 27 496 C2 und DE 195 01 828 C2 bekannt. Die vorgeschlagenen Gebläse bestehen aus mehreren Teilgebläsen, die über die Breite des zu den Reinigungsorganen führenden Hauptkanals gleichmäßig verteilt und auf einer gemeinsamen Antriebswelle angeordnet sind. Jedes Teilgebläse verfügt über ein eigenes separates Gebläsegehäuse, an das sich ein Hauptkanal oder ein Haupt- und Nebenkanal - DE 30 27 496 C2 - in tangentialer Anordnung anschließt. Um die Luftströme der Teilgebläse gleichmäßig über die gesamte Breite des Hauptkanals zu verteilen und in Strömungsrichtung innerhalb des Hauptkanals zu einem Gesamtluftstrom mit einem einheitlichen Strömungsprofil zusammenzuführen, sind an den Seitenwänden der Gebläsegehäuse Luftleitflächen vorgesehen. Diese Luftleitflächen bilden einzelne Luftkanäle und sind relativ weit in den Hauptkanal hineingeführt. Die Luftleitflächen sind ferner so angeordnet, dass sie einen spitzen Winkel einschließen, wobei die Luftleitflächen benachbarter Teilgebläsegehäuse in Strömungsrichtung des Luftstromes an ihren Endpunkten miteinander verbunden sind - DE 24 23 917, DE 29 22 607 C2 und DE 195 01 828 C2.

Dokument US-A-4 265 077 offenbart ein Radialgebläse mit allen Kennzeichnen aus dem Oberbegriff vom Anspruch 1.

An Hand von Untersuchungen wurde nun festgestellt, dass durch diese Ausbildung und Anordnung der Luftleitkanäle ein gleichmäßiges, homogenes Strömungsprofil des Luftstromes nicht erreicht werden und das Strömungsprofil in nachteiliger Weise stark beeinflusst wird. Die in den Teilgebläsen erzeugten Luftströme fließen mit einer relativ hohen Strömungsgeschwindigkeit an den Luftleitflächen entlang und prallen an den unter einem spitzen Winkel auslaufenden Enden der Luftleitflächen mit hoher Strömungsgeschwindigkeit aufeinander. Hierbei entstehen derart hohe Verwirbelungen und Turbulenzen, die das gesamte Strömungsprofil des Luftstromes nachteilig verändern. Die Ungleichmäßigkeit des Luftstromes und die im Luftstrom mitgeführten Verwirbelungen und Turbulenzen bauen sich auch innerhalb des Hauptkanals bis hin zum Kanalauslauf im Bereich der Reinigungssiebe nicht mehr ab, da der Raum für eine Beruhigungszone innerhalb des Hauptkanals nicht vorhanden ist oder nicht zur Verfügung steht.

Andererseits ist ebenfalls bekannt und durch Versuche auch nachgewiesen worden, dass durch Störungen in der Gleichmäßigkeit des Strömungsprofils des für die Reinigung zugeführten Luftstromes und durch Turbulenzen innerhalb dieses Luftstromes sich die Effektivität der Reinigungsprozesse nachhaltig verschlechtert und Erntegutverluste im Prozess der Reinigung begünstigt werden.

Der Erfindung liegt daher die Aufgabe zugrunde, eine hohe Vergleichmäßigung der Strömungsgeometrie des Reinigungsluftstromes zu erreichen und die durch die von Luftleitflächen begrenzten Strömungskanäle fließenden Teilluftströme so zusammenzuführen, dass die Reinigungsorgane mit einem gleichmäßig verteilten, homogenen und steuerbaren Reinigungsluftstrom beaufschlagt werden können.

Erfindungsgemäß wird diese Aufgabe durch ein Radialgebläse nach den Merkmalen von Anspruch 1 gelöst. Vorteilhafte Weiterbildungen der Erfindung ergeben sich aus den Unteransprüchen 2 bis 11.

Gegenüber den bisher bekannten Lösungen sind die Luftleitflächen, mit denen die in den Teilgebläsen erzeugten Teilluftströme über die gesamte Breite des zu den Reinigungseinrichtungen führenden Hauptkanals verteilt werden und die dann innerhalb des Haupt- und/oder Nebenkanals zu einem Gesamtluftstrom zusammenfließen, in geradliniger Verlängerung zu den Seitenwänden des Gebläsegehäuses eines jeden Teilgebläses angeordnet und schließen mit einer frontseitigen Stirnfläche ab, die die Luftleitflächen benachbarter Gebläsegehäuse der Teilgebläse miteinander verbindet.

Die Luftleitflächen können hierbei parallel zueinander oder zueinander konvergierend angeordnet sein.

Gemäß einer ersten Ausführungsform der erfindungsgemäßen Lösung ist die frontseitige Stirnfläche annähernd rechtwinklig zu den, an den in Verlängerung der Seitenwänden der Gebläsegehäuse liegenden Luftleitflächen angeordnet und die Übergänge zwischen den Luftleitflächen und der frontseitigen Stirnfläche durch Radien abgerundet, deren Größe durch die Länge der Luftleitflächen bestimmt wird. Die Radien R1 sind in der Regel kleiner als die Länge der Luftleitflächen, wobei das Verhältnis aus der Länge der Luftleitflächen und den Anrundungen R1 mit der Länge der Luftleitflächen zunimmt.

In Abwandlung dieser technischen Lehre kann mit ansteigender Länge der Luftleitflächen das Verhältnis aus der Länge der Luftleitflächen der Größe der Radien R1 auch zunehmen, wobei in jedem Fall der R1 kleiner als die Länge der zugehörigen Luftleitfläche ist.

Eine weitere altemative Lösung besteht darin, dass im Übergangsbereich zwischen der jeweiligen Luftleitfläche und der fronseitigen Stirnfläche Abschrägungen vorgesehen sind.

Nach einer bevorzugten Ausführungsform, ist die fronseitige Stirnfläche unter einem Radius R3 halbkreisförmig ausgebildet.

In jedem Fall kann die konstruktive Ausbildung von Luftleitflächen und fronseitiger Stirnfläche nicht beliebig gestaltet werden, sondern muss zwischen der Länge der parallel und kongruent zueinander verlaufenden Luftleitflächen, der Breite der frontseitigen Stirnfläche und den Radien R1 oder R3 ein bestimmtes Verhältnis bestehen, um die gewünschte Vergleichmäßigung im Strömungsprofil des aus den Teilluftströmen entstehenden Gesamtluftstromes zu erreichen.

Durch die erfindungsgemäße Lösung wird mit relativ einfachen Mitteln ein direktes Aufeinanderprallen der Teilluftströme in Strömungsrichtung am Auslauf der Luftleitflächen wirksam verhindert und das Entstehen von Turbulenzen und Verwirbelungen beim Aufeinandertreffen der Teilluftströme weitgehend ausgeschaltet.

Bedingt durch die erfindungsgemäße Gestaltung der frontseitigen Stirnfläche und der Strömungsgeschwindigkeit der Teilluftströme entstehen im Bereich des Abschlusses der Luftleitflächen Zonen mit einem durch die Strömung hervorgerufenen Unterdruck, die den Abbau noch entstehender Verwirbelungen und Turbulenzen vor dem Zusammenfließen der Teilluftströme zum Gesamtluftstrom begünstigen.

Ein weiterer Vorteil der Erfindung besteht darin, dass durch die vorgeschlagene Ausbildung und Anordnung der Luftleitflächen und der frontseitigen Stirnfläche die Gesamtlänge der Luftleitflächen, die die Strömungskanäle der Teilluftströme bilden, verkürzt werden können. Auf diese einfache Weise entsteht im Hauptkanai zwischen den frontseitigen Stirnflächen und dem Hauptkanalausgang eine ausreichende Beruhigungszone, in der sich Turbulenzen und Verwirbelungen, die in dem sich bildenden Gesamtluftstrom noch enthalten sind und mitgeführt werden, weiter abbauen. Die nachgeschalteten Reinigungsorgane können so mit einem steuerbaren, homogenen und über die gesamte Breite der Reinigungseinrichtung gleichmäßig verteilten Luftstrom beaufschlagt werden.

In Anwendung der erfindungsgemäßen Lösung können bei mehreren Luftkanälen zur Führung und Leitung der Teilluftströme unter Berücksichtigung der Erntebedingungen und des zu reinigenden Erntegutes innerhalb eines Hauptkanals auch Strömungsteiler mit unterschiedlicher Ausblasgeometrie und voneinander abweichender Ausbildung der frontseitigen Stirnfläche und der Übergangsverbindung zwischen den Luftleitflächen und der frontseitigen Stirnfläche vorgesehen werden.

Die Erfindung soll nachstehend an einem Ausführungsbeispiel näher erläutert werden. In der dazugehörigen Zeichnung zeigen:
Fig. 1 den Schnitt A - A aus Fig. 2 für ein Radialgebläse nach der Erfindung in schematischer Darstellung
Fig. 2 die Draufsicht auf den Schnitt B - B gemäß Fig.1

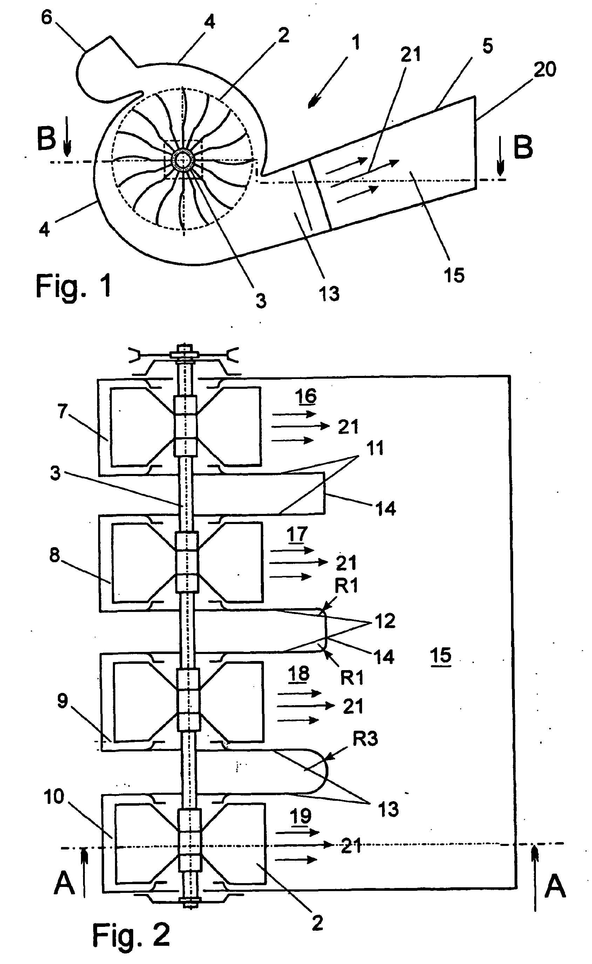

Das Radialgebläse 1 für die Reinigungseinrichtungen landwirtschaftlicher Erntemaschinen für Körnerfrüchte besteht aus mehreren, radialen Teilgebläsen 7; 8; 9; 10, die auf einer gemeinsamen Gebläsewelle 3 angeordnet und in bekannter Weise mit dem Maschineriantrieb der Erntemaschinen antriebsseitig verbunden sind - Fig. 2. Die Gebläseturbine 2 jedes Teilgebläses 7; 8; 9; 10 ist von einem separaten Gebläsegehäuse 4 mit einer im Bereich der Gebläsewelle 2 befindlichen Luftansaugöffnung umschlossen, an das sich in tangentialer Anordnung ein Hauptkanal 5 und, im vorliegenden Ausführungsbeispiel, ein Nebenkanal 6 anschließen - Fig. 1. Über den Hauptkanal 5 werden die am Hauptkanalausgang 20 angrenzenden Reinigungsorgane - nicht dargestellt - mit der erforderlichen Reinigungsluft versorgt, die sowohl für die Feinreinigung der Körnerfrüchte als auch für den Austrag der Verunreinigungen in Form von Kurzstroh und Spreu dient.

In an sich bekannter Weise wird über den Nebenkanal 6 ein weiterer Reinigungsluftstrom abgeleitet, der beispielsweise einer ersten Fallstufe zur Reinigung des vom Vorbereitungsboden kommenden Gemisches aus Körnerfrüchten, Kurzstroh und Spreu zugeführt wird.

Um die gewünschte, für eine effektive Reinigung der Körnerfrüchte erforderliche hohe Gleichmäßigkeit im Strömungsprofil des Reinigungsluftstromes, der durch die Zusammenführung der Teilluftströme der Teilgebläse 7; 8; 9; 10 innerhalb des Hautkanals 5 entsteht, zu erreichen, sind in geradliniger Verlängerung zu den Seitenwänden der einzelnen Gebläsegehäuse 4 Luftleitflächen 11; 12; 13 vorgesehen, die parallel und kongruent zueinander ausgebildet sind und in Strömungsrichtung der Luftströme Luftkanäle 16; 17; 18; 19 für die mit den Teilgebläsen 7; 8; 9; 10 erzeugten Teilluftströme bilden. Die in Strömungsrichtung liegenden Enden der Luftleitflächen 11; 12; 13 schließen mit einer frontseitigen Stirnfläche 14 ab, wobei die Stirnfläche 14 beide Enden der Luftleitflächen 11; 12; 13 miteinander verbindet.

Eine hohe Vergleichmäßigung im Strömungsprofil des Luftstromes ist erreichbar, wenn der Übergang resp. die Verbindung zwischen den Luftleitflächen 12 und der frontseitigen Stirnfläche 14 durch Radien R1 abgerundet ist, wobei im Interessen eines möglichst homogenen Luftstromes mit einem gleichmäßigen Strömungsprofil die Radien R1 kleiner als die Länge der Luftleitflächen 11; 12; 13 sein sollte und mit steigender Länge der Luftleitflächen die Größe der Radien R1 zunimmt.

Nach einer bevorzugten Ausführungsform ist die frontseitige Stirnfläche bogenförmig ausgebildet. Die Enden der zueinander parallel verlaufenden und kongruent ausgebildeten Luftleitflächen 13 werden in diesem Falle durch den Biegeradius R3 miteinander verbunden.

Die erfindungsgemäße Ausbildung und Anordnung der Luftleitfläche 11; 12; 13 verhindert das unmittelbare Aufeinandertreffen der Teilluftströme am strömungsseitigen Ende der Luftleitflächen und verringert dadurch die Gefahr, dass Turbulenzen entstehen und sich Strömungswirbel bilden, die das Strömungsprofil des Gesamtluftstromes nachteilig beeinflussen und zu einem nicht homogenen, ungleichmäßigen Luftstrom führen, was sich letztlich in nachteiliger Weise auf die Wirksamkeit und die Effektivität der Reinigungsprozesse auswirkt.

Aus der erfindungsgemäßen Ausbildung und Anordnung der Luftleitfläche 11; 12; 13 ergibt sich ferner der Vorteil, dass im Vergleich zu den bekannten Lösungen des Standes der Technik der in den Hauptkanal 5 hineinragende Teil der Luftleitfläche 11; 12; 13 mit der angeschlossenen Stimfläche 14 relativ kurz ist und auf diese Weise eine Beruhigungszone 15 zwischen dem Abschluss der Luftleitflächen und dem Hauptkanalausgang 20 entsteht, die ebenfalls zur Vergleichmäßigung des Gesamtluftstromes für die Reinigung in den Siebeinrichtungen beiträgt und den weiteren Abbau der noch im Luftstrom mitgeführten Turbulenzen fördert. Mit der erfindungsgemäßen Lösung kann die Effektivität der Reinigung der Körnerfrüchte weiter verbessert und gesteigert werden.

### BEZUGSZEICHENAUFSTELLUNG

- 1: Radialgebläse
- 2: Gebläseturbine
- 3: Gebläsewelle
- 4: Gebläsegehäuse
- 5: Hauptkanal
- 6: Nebenkanal
- 7: Teilgebläse
- 8: Teilgebläse
- 9: Teilgebläse
- 10: Teilgebläse
- 11: Luftleitfläche
- 12: Luftleitfläche
- 13: Luftleitfläche
- 14: Stirnfläche
- 15: Beruhigungszone
- 16: Luftkanal
- 17: Luftkanal
- 18: Luftkanal
- 19: Luftkanal
- 20: Hauptkanalausgang
- 21: Teilluftstrom

- R1: Radius
- R3: Radius

## Patentansprüche

1. Radialgebläse (1) für landwirtschaftliche Maschinen zum Emten von Körnerfrüchten, bestehend aus mehreren, auf einer gemeinsamen Antriebswelle (3) angeordneten Teilgebläsen (7, 8, 9, 10), die jeweils von einem Gebläsegehäuse (4) umschlossen sind an das sich in tangentialer Anordnung ein Nebenkanal (6) und/oder ein Hauptkanal (5) anschließen, die den erzeugten Luftstrom zu den Reinigungseinrichtungen der Erntemaschine leiten wobei an den Gebläsegehäusen (4) benachbarter Teilgebläse Luftkanäle (16, 17, 18, 19) bildende Luftleitflächen (11, 12, 13) vorgesehen sind, die in den Hauptkanal (5) hineinragen, wobei
die Luftleitflächen (11, 12, 13) in geradliniger Verlängerung zu den Seitenwanden des jeweiligen Gebläsegehäuses (4) eines jeden Teilgebläses (7, 8, 9, 10) ausgebildet sind und in Strömungsrichtung der Teilluftströme (21) mit einer frontseitigen Stirnfläche (14) abschließen, **dadurch gekennzeichnet, dass** die Stirnflächen (14) dem Gebläsegehäuse (4) nachgeordnet sind.

2. Radialgebläse nach Anspruch 1, **dadurch gekennzeichnet, dass** die Luftleitflächen (11; 12; 13;) parallel zueinander angeordnet sind.

3. Radialgebläse nach Anspruch 1, **dadurch gekennzeichnet, dass** die Luftleitflächen (11; 12; 13;) zueinander konvergierend angeordnet sind.

4. Radialgebläse nach einem oder mehreren der vorhergehenden Ansprüche, **dadurch gekennzeichnet, dass** die Übergange zwischen den Luftleitflächen (11; 12; 13) und den frontseitigen Stirnflächen (14) mit Radien R1 abgerundet sind.

5. Radialgebläse nach einem oder mehreren der vorhergehenden Ansprüche, **dadurch gekennzeichnet, dass** der Radius R1 kleiner als die Länge der zugehörigen Luftleitflächen (11; 12; 13) ist.

6. Radialgebläse nach einem oder mehreren der vorhergehenden Ansprüche, **dadurch gekennzeichnet, dass** der Radius R1 mit ansteigender Länge der Luftleitflächen (11; 12; 13) zunimmt.

7. Radialgebläse nach einem oder mehreren der vorhergehenden Ansprüche, **dadurch gekennzeichnet, dass** der Radius R1 mit ansteigender Länge der Luftleitflächen (11; 12; 13) abnimmt.

8. Radialgebläse nach einem oder mehreren der vorhergehenden Ansprüche, **dadurch gekennzeichnet, dass** die frontseitige Stirnfläche (14) bogenförmig ist und die Luftleitflächen (11; 12; 13) mit einem Radius R3 abschließen.

9. Radialgebläse nach einem oder mehreren der vorhergehenden Ansprüche, **dadurch gekennzeichnet, dass** die frontseitige Stimfläche (14) annähernd rechtwinklig zu den Luftleitflächen (11; 12; 13) angeordnet ist und im Übergangsbereich zwischen den Luftleitflächen (11; 12; 13) und der Stimfläche (14) Abschrägungen vorgesehen sind.

10. Radialgebläse nach einem oder mehreren der vorhergehenden Ansprüche, **dadurch gekennzeichnet, dass** bei mehreren Luftkanälen (16; 17; 18; 19) die Form der Luftleitkanäle und die Gestaltung der frontseitigen Stimfläche (14) der Luftleitflächen (11; 12; 13) voneinander abweichend ausgebildet ist.

11. Radialgebläse nach einem oder mehreren der vorhergehenden Ansprüche, **dadurch gekennzeichnet, dass** im Hauptkanal (5) zwischen dem frontseitigen Abschluss der Luftleitflächen (11; 12; 13) und dem Hauptkanalausgang (20) eine Beruhigungszone (15) vorhanden ist.

## Claims

1. A radial fan (1) for agricultural machines for harvesting grain comprising a plurality of fan portions (7, 8, 9, 10) which are arranged on a common drive shaft (3) and which are respectively enclosed by a fan housing (4) adjoined in a tangential direction by a secondary passage (6) and/or a main passage (5) which guide the air flow produced to the cleaning devices of the harvester, wherein provided at the fan housings (4) of adjacent fan portions are guide surfaces (11, 12, 13) which form air passages (16, 17, 18, 19) and which project into the main passage (5), wherein the air guide surfaces (11, 12, 13) are in the form of a straight prolongation relative to the side walls of the respective fan housing (4) of each fan portion (7, 8, 9, 10) and terminate in the flow direction of the air flow portions (21) with a front end face (14), **characterised in that** the end faces (14) are arranged downstream of the fan housing (4).

2. A radial fan according to claim 1 **characterised in that** the air guide surfaces (11; 12; 13) are arranged in mutually parallel relationship.

3. A radial fan according to claim 1 **characterised in that** the air guide surfaces (11; 12; 13) are arranged in mutually convergent relationship.

4. A radial fan according to one or more of the preceding claims **characterised in that** the transitions between the air guide surfaces (11; 12; 13) and the front end faces (14) are rounded with radii R1.

5. A radial fan according to one or more of the preceding claims **characterised in that** the radius R1 is smaller than the length of the associated air guide surfaces (11; 12; 13).

6. A radial fan according to one or more of the preceding claims **characterised in that** the radius R1 increases with increasing length of the air guide surfaces (11; 12; 13).

7. A radial fan according to one or more of the preceding claims **characterised in that** the radius R1 decreases with increasing length of the air guide surfaces (11; 12; 13).

8. A radial fan according to one or more of the preceding claims **characterised in that** the front end face (14) is arcuate and the air guide surfaces (11; 12; 13) terminate with a radius R3.

9. A radial fan according to one or more of the preceding claims **characterised in that** the front end face (14) is arranged approximately at a right angle to the air guide surfaces (11; 12; 13) and bevels are provided in the transitional region between the air guide surfaces (11; 12; 13) and the end face (14).

10. A radial fan according to one or more of the preceding claims **characterised in that** when there are a plurality of air passages (16; 17; 18; 19) the form of the air guide passages and the configuration of the front end face (14) of the air guide surfaces (11; 12; 13) are designed to differ from each other.

11. A radial fan according to one or more of the preceding claims **characterised in that** a calming zone (15) is present in the main passage (5) between the front termination of the air guide surfaces (11; 12; 13) and the main passage outlet (20).

## Revendications

1. Soufflante radiale (1) pour des machines agricoles destinées à la récolte de grains, se composant de plusieurs soufflantes partielles (7, 8, 9, 10) disposées sur un arbre d'entraînement (3) commun, qui sont entourées respectivement par un boîtier de soufflante (4), auquel se raccordent en disposition tangentielle un canal auxiliaire (6) et/ou un canal principal (5), qui mènent le courant d'air généré jusqu'aux dispositifs de nettoyage de la moissonneuse, des surfaces de conduite d'air (11, 12, 13) formant des canaux d'air étant prévues sur les boîtiers de soufflante (4) de soufflante partielle contiguë, lesquelles pénètrent dans le canal principal (5), dans laquelle
les surfaces de conduite d'air (11, 12, 13) sont réalisées en prolongement rectiligne par rapport aux parois latérales du boîtier de soufflante (4) respectif de chaque soufflante partielle (7, 8, 9, 10) et terminent dans le sens de passage des courants d'air partiels (21) par une surface frontale (14) côté avant, **caractérisée en ce que** les surfaces frontales (14) sont disposées en aval du boîtier de soufflante (4).

2. Soufflante radiale selon la revendication 1, **caractérisée en ce que** les surfaces de conduite d'air (11 ; 12 ; 13) sont disposées parallèlement les unes aux autres.

3. Soufflante radiale selon la revendication 1, **caractérisée en ce que** les surfaces de conduite d'air (11 ; 12 ; 13) sont disposées de manière convergente les unes aux autres.

4. Soufflante radiale selon l'une quelconque ou plusieurs des revendications précédentes, **caractérisée en ce que** les passages entre les surfaces de conduite d'air (11 ; 12 ; 13) et les surfaces frontales (14) côté avant sont arrondis avec des rayons R1.

5. Soufflante radiale selon l'une quelconque ou plusieurs des revendications précédentes, **caractérisée en ce que** le rayon R1 est inférieur à la longueur des surfaces de conduite d'air (11 ; 12 ; 13) afférentes.

6. Soufflante radiale selon l'une quelconque ou plusieurs des revendications précédentes, **caractérisée en ce que** le rayon R1 augmente en même temps que la longueur des surfaces de conduite d'air (11 ; 12 ; 13) augmente.

7. Soufflante radiale selon l'une quelconque ou plusieurs des revendications précédentes, **caractérisée en ce que** le rayon R1 décroît en même temps que la longueur des surfaces de conduite d'air (11 ; 12 ; 13) croît.

8. Soufflante radiale selon l'une quelconque ou plusieurs des revendications précédentes, **caractérisée en ce que** la surface frontale (14) côté avant est coudée et les surfaces de conduite d'air (11 ; 12 ; 13) se terminent avec un rayon R3.

9. Soufflante radiale selon l'une quelconque ou plusieurs des revendications précédentes, **caractérisée en ce que** la surface frontale (14) côté avant est disposée approximativement à angle droit des surfaces de conduite d'air (11 ; 12 ; 13) et des biais sont prévus dans la zone de passage entre les surfaces de conduite d'air (11 ; 12 ; 13) et la surface frontale (14).

10. Soufflante radiale selon l'une quelconque ou plusieurs des revendications précédentes, **caractérisée en ce qu'**en cas de plusieurs canaux d'air (16 ; 17 ; 18 ; 19), la forme des canaux de conduite d'air et la configuration de la surface frontale (14) côté avant des surfaces de conduite d'air (11 ; 12 ; 13) sont réalisées de manière divergente.

11. Soufflante radiale selon l'une quelconque ou plusieurs des revendications précédentes, **caractérisée en ce qu'**une zone de repos (15) est présente dans le canal principal (5) entre la terminaison côté avant des surfaces de conduite d'air (11 ; 12 ; 13) et la sortie de canal principal (20).
